# EUROPEAN PATENT SPECIFICATION

(11) **EP 3 924 279 B1**
(45) Date of publication and mention of the grant of the patent: **29.03.2023**
(21) Application number: 20710588.3
(22) Date of filing: 12.02.2020
(51) Int. Cl.: B65G 49/08

(54) **A TILE LOADING/UNLOADING SYSTEM INTO/FROM A STOREHOUSE**
EIN SYSTEM ZUM LADEN/ENTLADEN VON FLIESEN IN/AUS EINEM LAGERHAUS
UN SYSTÈME DE CHARGEMENT/DÉCHARGEMENT DE CARREAUX DANS UN ENTREPÔT

(30) Priority: 13.02.2019 IT 201900002051
(43) Date of publication of application: 22.12.2021
(73) Proprietor: SACMI TECH S.p.A., 40026 Imola (BO) (IT)
(72) Inventor: BARDI, Maurizio, 41043 Formigine (MO) (IT)
(74) Representative: Dall'Olio, Christian
(86) International application number: PCT/IB2020/051124
(87) International publication number: WO 2020/165785

(56) References cited:
- EP-A1- 0 999 158
- EP-A1- 1 243 532
- EP-A1- 1 752 398
- EP-A1- 2 826 736

## Description

### FIELD OF THE INVENTION

The present invention relates to the technical sector relative to production and storage of tiles and like articles for the building sector.

### DESCRIPTION OF THE PRIOR ART

The practice is known of stocking and storing tiles in vertical storehouses comprising a series of storage shelves, arranged above one another, on which the tiles are deposited.

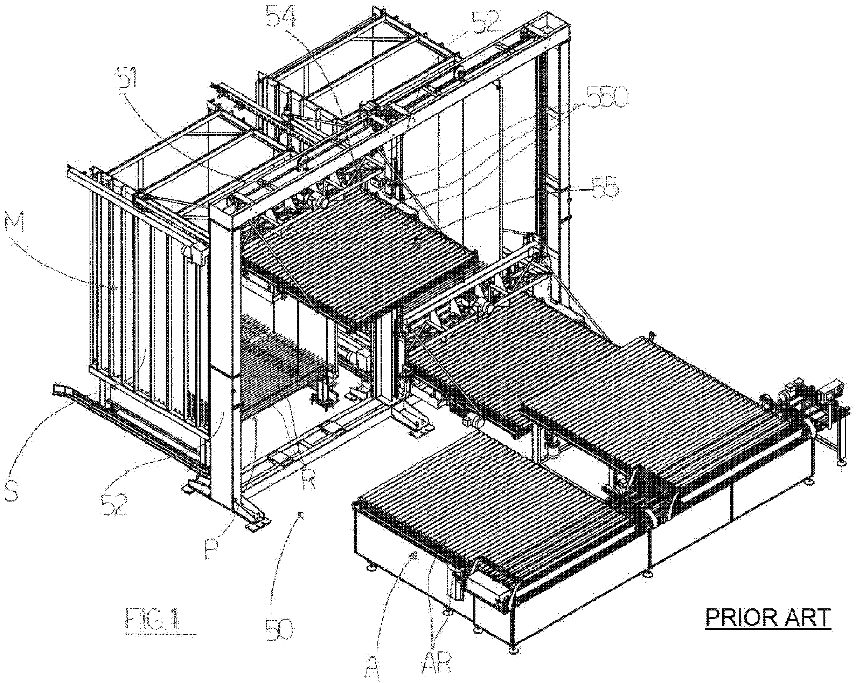

A known system (50) for loading/unloading tiles in or from a storehouse (M) is illustrated in figure 1.

The storehouses (M) for storing tiles comprise a vertical structure (S), frontally open, and a series of storage shelves (P) which are generally constituted by a series of rollers (R) mounted parallel to one another, transversally to the storehouse (M) (in figure 1, for the sake of simplicity, only one storage shelf is illustrated).

The rollers (R) of the various storage shelves (P) are mounted idle and the storehouse (M) has a motorisation system of the rollers, for example comprising a series of chucks activatable in rotation by means of relative actuator organs.

The roller motorisation system is activatable to move the chucks to couple with the rollers of the storage shelf on which the tiles must be loaded or from which they are to be unloaded, so that the actuator organs can activate the chucks and therefore also the rollers in rotation.

In this way the tiles can easily be transferred onto the storage shelves (P) by sliding them on the rollers (R) activated in rotation, or extracted from the storage shelves (P), again by sliding them on the rollers (R) activated in rotation.

The loading/unloading system (50) comprises a bearing frame (51), having two uprights (52) and a movable frame (54) which is mounted on the first bearing frame (51) so as to be translatable vertically along the uprights (52). A tile transfer unit (55) is mounted on the movable frame (54) and is for example constituted by a group of motorised rollers (550) mounted parallel to one another.

The bearing frame (51) is positioned frontally of the storehouse (M), between the storehouse (M) and an infeed station (A) of the tiles.

The movable frame (54) is translatable vertically along the uprights (52) of the bearing frame (51) so as be able to position the transfer unit (55) in a lowered base position, at the tile infeed station (A), as well as in a series of raised positions each at the various storage shelves (P) of the storehouse (M).

The infeed station (A) of the tiles comprises a series of motorised rollers (AR) on which rows of tiles are positioned.

The rows of tiles are fed onto the series of motorised rollers (AR) of the infeed station (A), which are arranged one by the side of another to constitute a group of tiles.

The group of tiles which is formed in the infeed station (A) will have a suitable dimension in order to be positioned on a storage shelf (P) of the storehouse (M).

For example, the storage shelves of the storehouse (M) can be designed so as to be able to receive 3 rows of tiles, flanked, each of which rows comprises 4 tiles, i.e. a 3x4 group of tiles, giving a total of 12 tiles.

In this case, 3 rows of tiles, flanked, each of which comprising 4 tiles, i.e. a 3x4 group of tiles, can be predisposed in the infeed station (A).

The loading/unloading system (50) described in the foregoing functions in the following way.

The movable frame (54) is translated with respect to the uprights (52) of the bearing frame (51) so as to be positioned in the lowered base position in order to position the transfer unit (55) to the tile infeed station (A).

As soon as a first group of tiles has been formed in the infeed station (A), the series of motorised rollers (AR) of the infeed station (A) is activated to transfer the first group of tiles onto the transfer unit (55).

Therefore, the movable frame (54) is translated with respect to the uprights (52) of the bearing frame (51) so as to be positioned in the first raised position, at a first storage shelf, for example the highest, present in the storehouse. The motorisation system is activated to move the chucks to couple them to the rollers of the first storage shelf and the actuator organs are then activated to set the chucks in rotation, and therefore the rollers.

The group of motorised rollers (550) of the transfer unit (55) is therefore activated to transfer and load the first group of tiles on the rollers of the first storage shelf.

Once the transfer operations of the first group of tiles has been completed, the movable frame (54) is translated with respect to the uprights (52) of the bearing frame (51) so as to be newly positioned in the lowered base position in order to receive a second group of tiles which in the meantime has formed in the infeed station (A).

The series of motorised rollers (AR) of the infeed station (A) transfers the second group of tiles onto the transfer unit (55), and then the movable frame (54) is raised with respect to the uprights (52) so as to be positioned in the second raised position, lower than the first raised position, at a second storage shelf situated below the first storage shelf.

The motorisation system must be newly activated so as to move the chucks to couple them to the rollers of the second storage shelf and the actuator organs are then activated to set the rollers of the second storage shelf in rotation. Then the group of motorised rollers (550) of the transfer unit (55) is activated to transfer and load the second group of tiles onto the rollers of the second storage shelf.

The above-described operations are repeated cyclically until all the storage shelves (P) of the storehouse (M) have been filled with corresponding groups of tiles.

The loading/unloading system, with the same functioning principle, can also be used to carry out the unloading of the storehouse, i.e. so as to transfer the groups of tiles from the various storage shelves of the storehouse to the infeed station.

In this case, time by time, the movable frame (54) will be movable with respect to the uprights (52) of the bearing frame (51) first, so as to position the transfer unit (55) at a storage shelf of the storehouse so that the group of rollers (550) of the transfer unit (55) can receive the group of tiles from the storage shelf, once the motorisation system has been activated to couple the chucks to the rollers of the storage shelf and the actuator organs are activated to set the rollers in rotation, and then, thereafter, at the infeed station (A), so that the group of rollers (550) can transfer the group of tiles onto the motorised rollers (AR) of the infeed station.

This type of loading/unloading system of the prior art has been revealed to be substantially effective in carrying out the transfer operations of the groups of tiles from the infeed station to the various storage shelves of the storehouse and vice versa.

However, this system has some limitations, especially concerning productivity, i.e. the time required to be able to fill (or download) all the storage shelves of the storehouse.

At present, the loading/unloading system described in the foregoing is able to carry out about 2.5 - 3 loading/unloading cycles per minute, i.e. in order carry out about 2.5 - 3 tile transfer operations from the infeed station to the storage shelves of the storehouse.

In fact, if on the one hand the movement of the movable frame with respect to the bearing frame can take place rapidly, on the other hand each transfer operation of the tiles, from the infeed station to the transfer unit of the movable frame, but especially from the transfer unit of the movable frame to the storage shelf, requires in any case a certain waiting time which negatively influences the maximum obtainable productivity.

In particular, the time required for carrying out the transfer of the tiles from the transfer unit of the movable frame to the rollers of a storage shelf of the storehouse is what has the greatest effect on the overall time cycle.

In fact, as described in the foregoing, for each storage shelf on which the tiles are to be loaded (or unloaded), it is necessary to proceed first to activation of the motorisation system, i.e. the movement of the chucks, to couple them to the rollers of the storage shelf and to activate the actuator organs to set the chucks, and therefore the rollers, in rotation, and thereafter to proceed to the activation in rotation of the group of motorised rollers (550) of the transfer unit (55).

Document EP 2.826.736 A1 discloses a tile loading/unloading system into/from a storehouse according to the preamble of claim 1.

### SUMMARY OF THE INVENTION

The aim of the present invention is therefore to provide a new tile loading/unloading system into/from the storehouse that obviates the drawbacks in the prior art as described in the foregoing.

In particular, an aim of the present invention is to provide a new tile loading/unloading system which enables obtaining an increase in productivity with respect to the prior art, i.e.to carry out a greater number of tile transfer operations per minute, between the infeed station and the storage shelves of the storehouse, and vice versa.

The above aims are obtained with a novel tile loading/unloading system into/from a storehouse, according to claim 1.

### BRIEF DESCRIPTION OF THE DRAWINGS

The characteristics of a preferred embodiment of the tile loading/unloading system into/from a storehouse of the present invention are described in the following with reference to the appended tables of drawings, in which:
- figure 1, already mentioned in the foregoing, is a schematic perspective view of the loading/unloading system of the prior art, as described in the foregoing;
- figure 2A is the loading/unloading system of the invention in a schematic perspective view;
- figure 2B is a plan view from above the loading/unloading system of figure 2A;
- figures from 3A to 3M illustrate, in respective schematic lateral views, a possible operating sequence of the functioning of the loading/unloading system of the invention, for loading the tiles from the infeed station to the various storage shelves of the storehouse;
- figures from 4A to 4M illustrate corresponding plan views from above of figures from 3A to 3M.

### DESCRIPTION OF PREFERRED EMBODIMENTS

With reference to the appended tables of drawings, reference numeral (100) denotes the tile loading/unloading system of the present invention.

The system (100) of the invention is usable to carry out the transfer of tiles from an infeed station (A), where the tiles are fed to form groups of tiles, to a storehouse (M), wherein the groups of tiles are to be stored, and vice versa, where they are to be collected from the storehouse (M) to be transferred to the infeed station (A), from which, then, the groups of tiles can be transferred towards movement lines of the tiles.

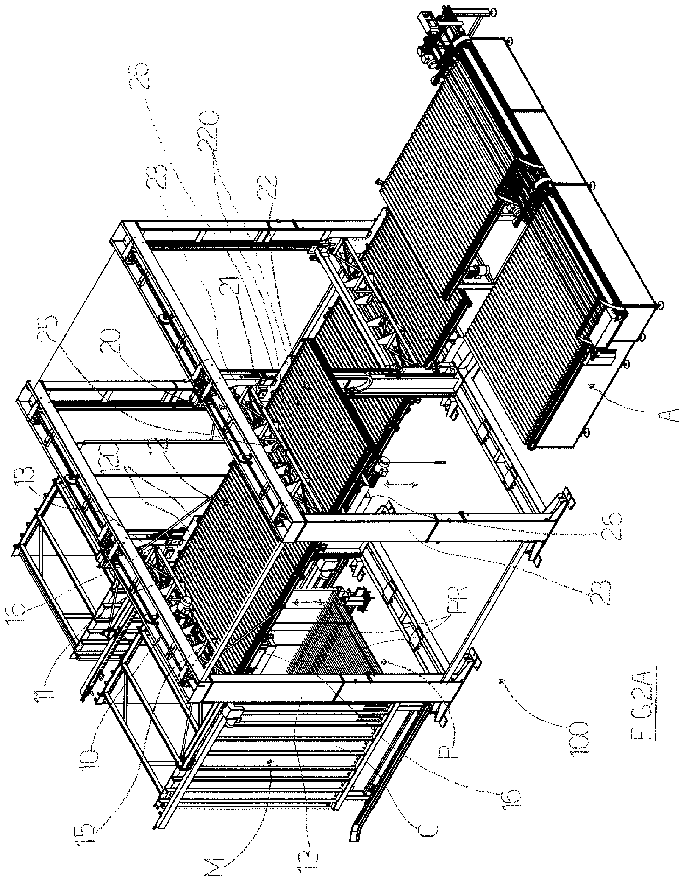

As indicated in the foregoing, the storehouse (M) in which tiles are to be stored, or from which the tiles are to be collected, comprises a series of storage shelves (P) arranged one above another (in figure 2A, for the sake of simplicity, only one of the storage shelves that can be present in the storehouse (M) is illustrated).

For example, the storehouse (M) comprises a support structure in the form of a column (C) which is at least frontally open.

Each storage shelf (P) comprises a series of rollers (PR), mounted idle and parallel to one another transversally internally of the storehouse, to facilitate the loading and unloading of the tiles.

The storehouse (M) is also provided with a motorisation system (not illustrated as not pertinent to the invention) to drive the rollers of the storage shelf on/from which the tile transfer operations are to be carried out.

This motorisation system can comprise, as for example described in the foregoing, a series of chucks, which are moved in such a way as to couple with the rollers of the storage shelf involved in the tile transfer operations, and actuator organs for setting the chucks in rotation, and therefore the rollers.

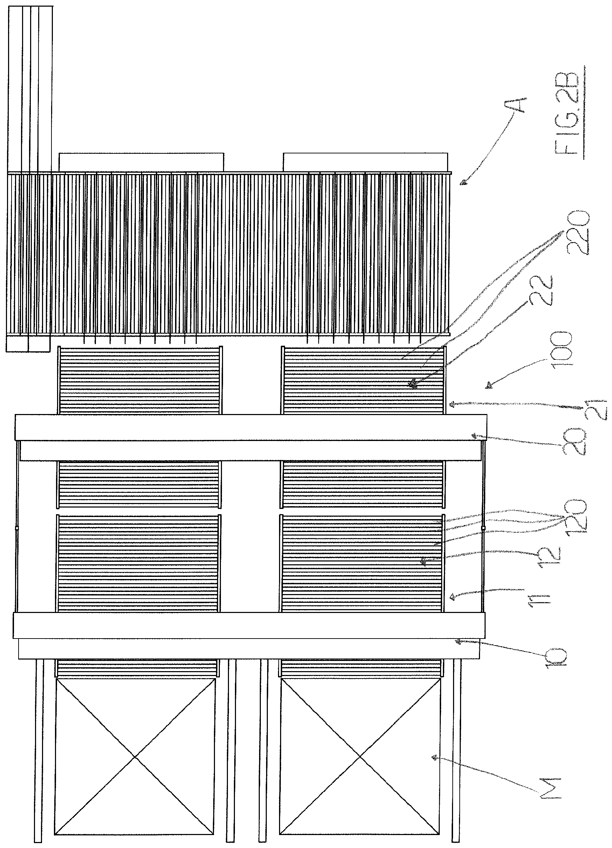

The loading/unloading system (100) of the invention, as illustrated for example in figures 2A and 2B, comprises:
a first bearing frame (10), arranged facing the front opening of the storehouse (M);
a first movable frame (11), which is mounted on the first bearing frame (10) so as to be translatable vertically with respect to the first bearing frame (10).

The first movable frame (11) comprises a first transfer unit (12) which is configured to receive tiles and is activatable to transfer and move the tiles. The first movable frame (11) is translatable vertically with respect to the first bearing frame (10) so as to position the first transfer unit (12) in a series of raised positions at the various storage shelves (P) of the storehouse (M).

The special characteristics of the system (100) of the invention consist in the fact that it further comprises:
a second bearing frame (20), arranged between the first bearing frame (10) and the infeed station (A),
a second movable frame (21), which is mounted on the second bearing frame (20) so as to be translatable vertically with respect to the second bearing frame (20).

The second movable frame (21), in turn, comprises a second transfer unit (22) which is configured to receive tiles and is activatable to transfer and move the tiles.

The second movable frame (21) is translatable vertically with respect to the second bearing frame (20) independently of the translation of the first movable frame (11) with respect to the first bearing frame (10).

In particular, the second movable frame (21) is translatable vertically with respect to the second bearing frame (20) so as to position the second transfer unit (22) in a lowered base position, at the infeed station (A), from which the tiles to be loaded in the storehouse, or on which the tiles unloaded from the storehouse are to be positioned, as well as in a series of raised positions at the raised positions in which the first transfer unit (12) of the first movable frame (11) is positioned.

In this way, the first movable frame (11) can be translatable vertically with respect to the first bearing frame (10) so as to position the first transfer unit (12) only at the positions of the various storage shelves (P) of the storehouse (M), without having each time to be newly repositioned in a lowered position at the infeed station (A), as it will be the second movable frame (21) that is translatable vertically with respect to the second bearing frame (20) so as to be positioned, time by time, in the lowered base position, at the infeed station (A).

This will enable a reduction in the overall time required for carrying out a complete cycle of loading and unloading the storehouse.

For example, in a case where the system (100) of the invention is used to load tiles into the storehouse (M), during the time in which the first movable frame (11) is positioned in a first raised position at a first storage shelf of the storehouse (M), the motorisation system of the storehouse moves the chucks to couple them to the rollers of the first storage shelf and the actuator organs are activated to set the chucks in rotation, and therefore the rollers and, thereafter, the first transfer unit (12) is activated to carry out a transfer of a first group of tiles onto the first storage shelf (P) of the storehouse (M), the second movable frame (21), in the meantime, can be translated to position the second transfer unit (22) into the lowered base position, at the infeed station (A), so that the second transfer unit (22) can be activated to receive a second group of tiles from the infeed station (A).

Once the whole first group of tiles has been transferred onto the first storage shelf, the first movable frame (11) can be positioned in a second raised position in which the first transfer unit (12) is at a second storage shelf (P) of the storehouse (M), and the second movable frame (21) can be translated and positioned in a relative raised position at the second raised position of the first movable frame (11) in order to position the second transfer unit (22) at the same height as the first transfer unit (12).

In this way, the second transfer unit (22) can be activated to transfer the second group of tiles, which it had collected from the infeed station (A), onto the first transfer unit (12), and thereafter, while the motorisation system of the rollers is activated to activate in rotation the rollers of the second storage shelf and the first transfer unit (12) of the first movable frame (11) is activated to transfer the second group of tiles onto the second storage shelf (P) of the storehouse (M), the second movable frame (21) can be translated so as to newly position the second transfer unit (22) in a lowered base position so as to receive a further group of tiles.

The above-described operations can be cyclically repeated until all the storage shelves of the storehouse are filled with corresponding groups of tiles.

Owing to the presence of the second movable frame, and the second transfer unit, there will be no dead time, in the loading/unloading system of the invention, while waiting for a transfer of the tiles to complete on a storage shelf of the storehouse, as the system can already proceed, with the second movable frame and the second transfer unit, to receive another group of tiles from the infeed station (A).

This enables a significant reduction of the overall time required to complete a whole loading cycle of all the storage shelves of the storehouse.

In the same way, in a case in which the system of the invention is used to carry out the emptying of a storehouse, the time required for carrying out the unloading operations will be less than in the prior art.

In fact, while first movable frame (11) can be positioned in a first raised position so as to position the first transfer unit (12) in a series of raised positions of a first storage shelf of the storehouse (M), the second movable frame (21) can be translated and positioned in a corresponding raised position in order to position the second transfer unit (22) at the same height and at the first transfer unit (12).

In this way, the second transfer unit (12) can be activated to receive a group of tiles extracted from the first storage shelf and transfer the first group of tiles directly onto the second transfer unit (22) of the second movable frame (21). Therefore, while the first movable frame (11) is translated and positioned in a second raised position so as to position the first transfer unit (12) at a second storage shelf (P), and the first transfer unit (12) is activated to receive a second group of tiles from the second storage shelf (P), the second movable frame (21) can be translated so as to position the second transfer unit (22) in a lowered base position, at the infeed station (A) and the second transfer unit (22) can be activated to transfer the first group of tiles on the infeed station (A).

Further and other advantageous characteristics of the tile loading/unloading system of the invention are described in the following.

The second movable frame (21) is advantageously configured and realised so that a number of tiles can be positioned on the second transfer unit (22) that is greater than the number of tiles positionable on each shelf of the storage shelves (P) of the storehouse (M).

The second transfer unit (22) is preferably configured and realised in such a way as to be able to receive thereon, and thus move and transfer, a total number of tiles that is greater than a fraction of the number of tiles positionable on each shelf of the storage shelves of the storehouse, and also be configured and realised so as to be able to receive thereon up to a number of tiles that is double or a multiple of the number of tiles positionable on the storage shelves of the storehouse.

For example, if the storage shelves of the storehouse are dimensioned to receive a group of tiles comprising 3 rows of tiles, each of which comprising 4 tiles (i.e. a 3x4 group of tiles), the second transfer unit can be realised in such a way that it can receive thereon a group of tiles comprising 4 rows of tiles, each of which comprising 4 tiles (i.e. a 4x4 group of tiles, such as for example illustrated in figures from 4A to 4M), or also in such a way as to receive thereon a group of tiles comprising 5 or 6 rows of tiles, each row comprising 4 tiles.

The loading/unloading system (100) of the invention can preferably be such that the first movable frame (10) is configured and realised so that a number of tiles can be positioned on the first transfer unit (12) that is greater than the number of tiles positionable on each shelf of the storage shelves (P) of the storehouse (M), for example a total number of tiles that is greater than a fraction of the number of tiles positionable on each shelf of the storage shelves of the storehouse, up to a number of tiles that is double or a multiple of the number of tiles positionable on the storage shelves of the storehouse.

With this configuration, it will be possible to reduce the number of times that the second frame, and therefore the second transfer unit, will have to be positioned at the infeed station (A), and thus further reduce the time necessary to complete a whole tile loading/unloading cycle into/from the storehouse.

In the embodiment illustrated in the figures, the first bearing frame (10) comprises two uprights (13) and the first movable frame (11) is slidably mounted on the two uprights (13); in turn, the second bearing frame (20) comprises two uprights (23) and the second movable frame (21) is slidably mounted on the two uprights (23).

The first transfer unit (12) comprises a first group of motorised rollers (120), wherein the second transfer unit (22) comprises a second group of motorised rollers (220).

In the preferred and illustrated embodiment, the first movable frame (11) comprises a main member (15), which is slidably mounted on the two uprights (13) of the first bearing frame (10), and at least two secondary members (16), coupled to the main member (15), for supporting the first transfer unit (12). For example the main member (15) is mounted slidably along vertical guides predisposed along the two uprights (13) of the first bearing frame (10), and is moved by chains activatable by relative motor organs.

The second movable frame (21) in turn comprises a main member (25), slidably mounted on the two uprights (23) of the second bearing frame (20), and at least two secondary members (26), coupled to the main member (25), for supporting the second transfer unit (22).

For example, in this case too the main member (25) of the second movable frame (21) is mounted slidably along vertical guides predisposed along the two uprights (23) of the second bearing frame (20), and is moved by chains activatable by relative motor organs.

In a case where there are two or more storehouses (M) flanked to one another, for example two flanked storehouses as illustrated in figures 2A and 2B, the loading/unloading system of the invention can be configured and realised in the following way.

It can comprise a pair of first bearing frames (10) flanked to one another, each with two uprights (13), and with a pair of first movable frames (11), translatable vertically along the uprights (13), each of which bears a relative first transfer unit (12).

In this regard, the pair of first movable frames (11) can be activated by means of a same chain motion system which is predisposed so that when one first movable frame (11) is raised the other first movable frame (11) is lowered. Correspondingly the loading/unloading system will comprise a pair of second bearing frames (20) flanked to one another, each with two uprights (23), and with a pair of second movable frames (21), translatable vertically along the uprights (23), each of which bears a relative second transfer unit (22).

In this regard, the pair of second movable frames (21) can be activated by means of a same chain motion system which is predisposed so that when one second movable frame (21) is raised the other second movable frame (21) is lowered.

In the following, with reference to figures from 3A to 3M and from 4A to 4M, a possible operating mode of the loading/unloading system of the invention is described, relative to the need to transfer and store tiles, which time by time are positioned in the infeed station (A), on various storage shelves (P) of a storehouse (M).

In this particular case, entirely by way of example and therefore not limiting for the possible configurations and modalities of the loading/unloading system of the invention, the loading/unloading system is realised so that the second transfer unit (22), mounted on the second movable frame (21), is configured to be able to receive a number of tiles that is greater, for example by a fraction, of the number of tiles positionable on the various storage shelves of the storehouse.

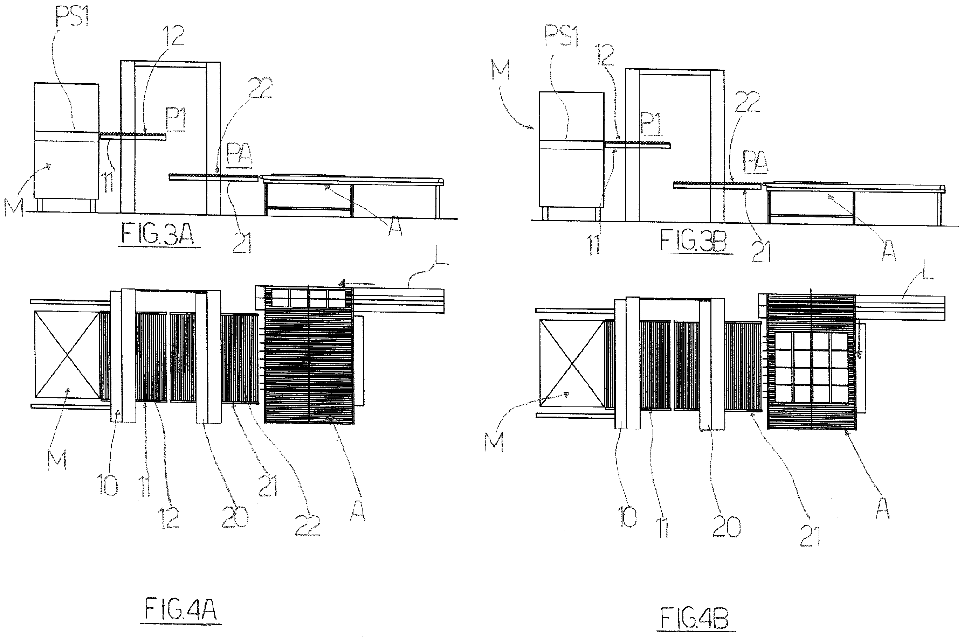

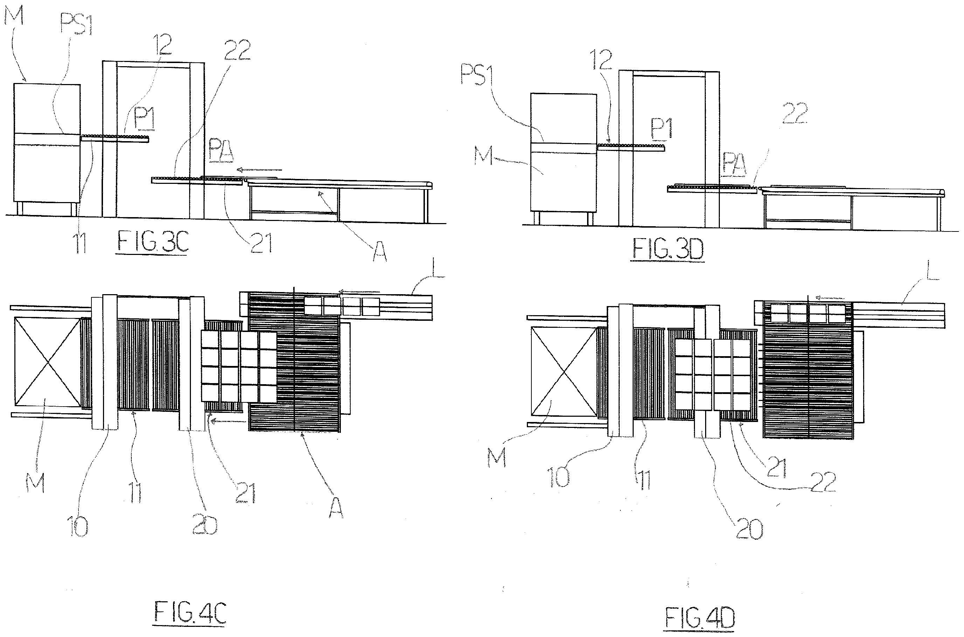

Figures 3A and 4A illustrate a possible initial position in which the first movable frame (11) is positioned in a first raised position (P1) so as to position the first transfer unit (12) at a first storage shelf (PS1) of the storehouse (M), while the second movable frame (21) is positioned in the lowered base position (PA) so as to position the second transfer unit (22) at the infeed station (A).

The storage shelves of the storehouse (M) are dimensioned to be able to receive a group of tiles comprising 3 rows of tiles, each of which comprising 4 tiles, i.e. a 3x4 group of tiles.

Rows of 4 tiles are positioned in succession on the infeed station (A), coming from a tile movement line (L) up to forming a first group of tiles formed by 4 rows of tiles, i.e. a 4 x 4 group of tiles (see figures 3B and 4B).

Once a first group of 4 x 4 tiles has been formed on the infeed station (A), the first group of tiles is transferred onto the second transfer unit (22) of the second movable frame (21) (see figures 3C-3D, and 4C-4D).

The second movable frame (21) is then translatable vertically with respect to the second bearing frame (20) so as to be positioned in a raised position in which the second transfer unit (22), with the first group of tiles, is positioned at the first transfer unit (12), in the relative first raised position (P1) in front of the first storage shelf (PS1).

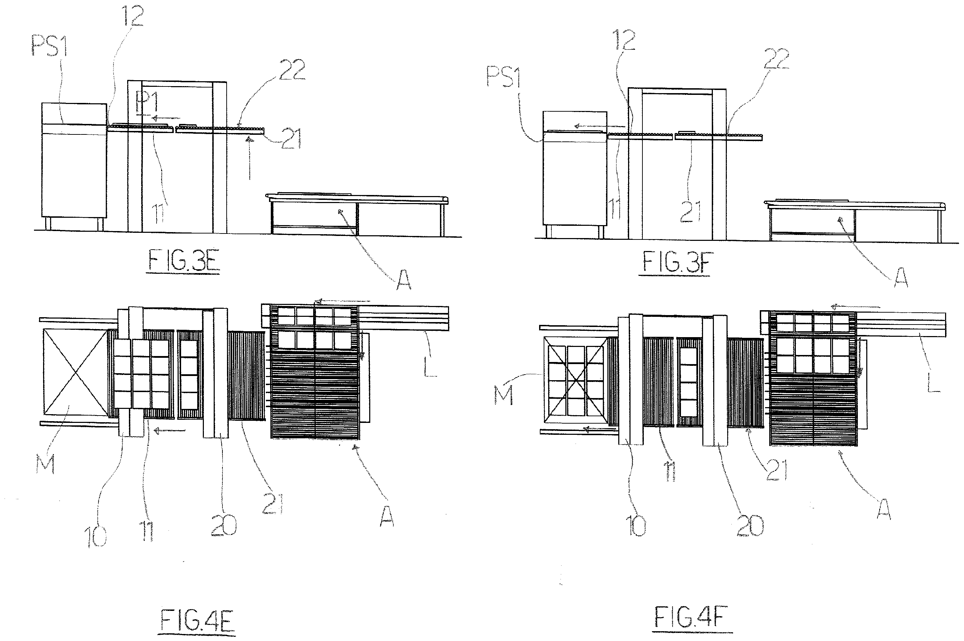

The second transfer unit (22) is then activated to transfer 3 rows of the first group of tiles onto the first transfer unit (12), while retaining a single row of tiles on itself (see figures 3E and 4E).

Then, the first transfer unit (12), which has received a group of tiles formed by 3 rows of 4 tiles, is activated to transfer the group of tiles onto the first storage shelf (PS1) of the storehouse (M) (see figures 3F and 4F).

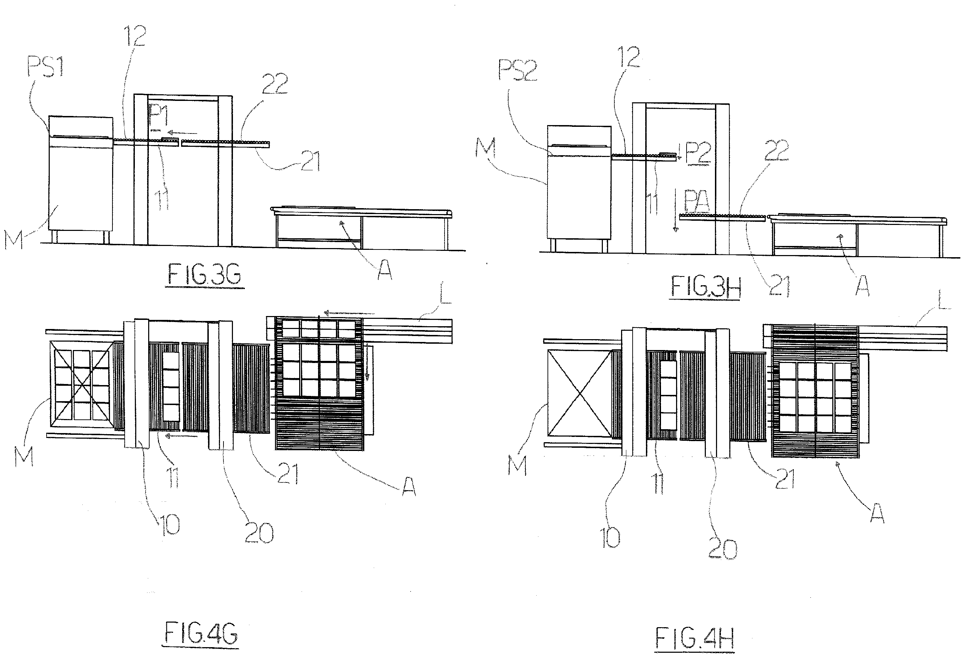

Once the transfer has completed, the second transfer unit (22) is activated to transfer the remaining single row of 4 tiles onto the first transfer unit (12) (figures 3G and 4G).

Alternatively, according to a possible mode of operation that is not illustrated, the second transfer unit (22) can be activated to immediately transfer all 4 rows of tiles onto the first transfer unit (12). The first transfer unit (12) can then be activated to translate 3 rows of tiles onto the first storage shelf, while retaining the remaining fourth row of tiles on itself, while the second movable frame (21) can be immediately translated so as to position the second transfer unit (22) in a lowered base position, and receive a new group of 4 x 4 tiles.

The first movable frame (11), with the first transfer unit (12) having a single row of 4 tiles positioned thereon, is translatable with respect to the first bearing frame (10) so as to be positioned in a second raised position (P2), at a height that is lower than the first raised position (P1), so that the first transfer unit (12) is positioned at a second storage shelf (PS2) of the storehouse (M), while the second movable frame (21), as mentioned in the foregoing, can be newly positioned in the lowered base position (PA) at the infeed station (A) (see figures 3H and 4H), on which, in the meantime, a second group of tiles has been formed in 4 x 4 formation, i.e a group having 4 rows of 4 tiles.

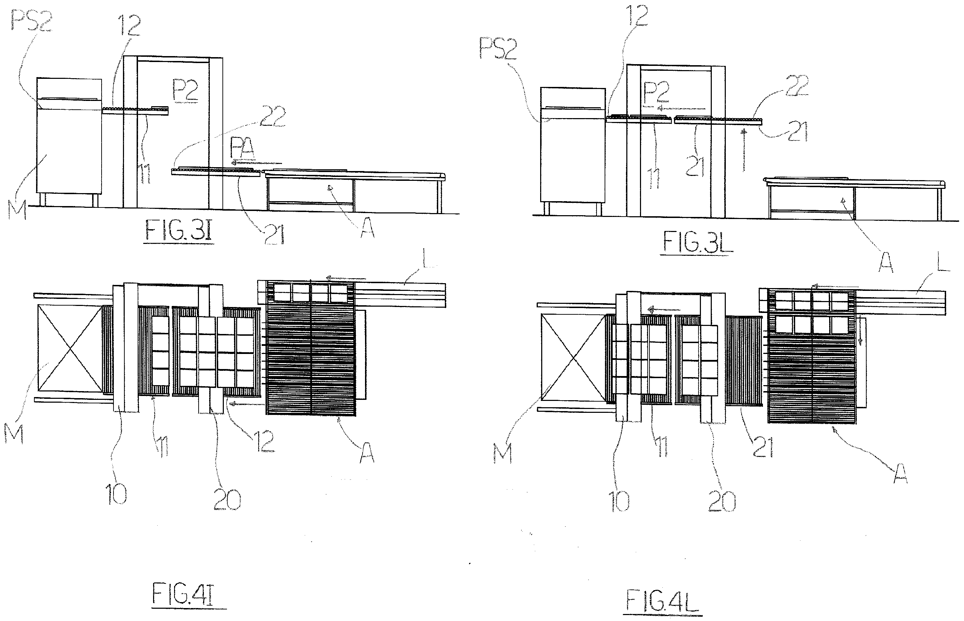

Returning, but not limitedly, to the example illustrated in the figures, the second group of tiles 4 x 4 is transferred onto the second transfer unit (22) (figures 3I and 4I), and then the second movable frame (21) is translated and raised with respect to the second bearing frame (20) in order to be positioned in a relative other raised position wherein the second transfer unit (22), with the second group of tiles, is positioned at the first transfer unit (12), in the relative second raised position (P2) in front of the second storage shelf (PS2), and, thereafter, the second transfer unit (22) is activated to transfer 2 rows of the second group of tiles onto the first transfer unit (12), which in the meantime is activated to move the single row of tiles present thereon towards the storehouse (M) (see figures 3L and 4L).

In this way, a group of tiles having 3 rows of 4 tiles is newly formed on the first transfer unit (12), i.e. a group of tiles of a shape suitable to be transferred onto the second storage shelf (PS2) of the storehouse (M); therefore 2 rows of 4 tiles will remain on the second transfer unit (22).

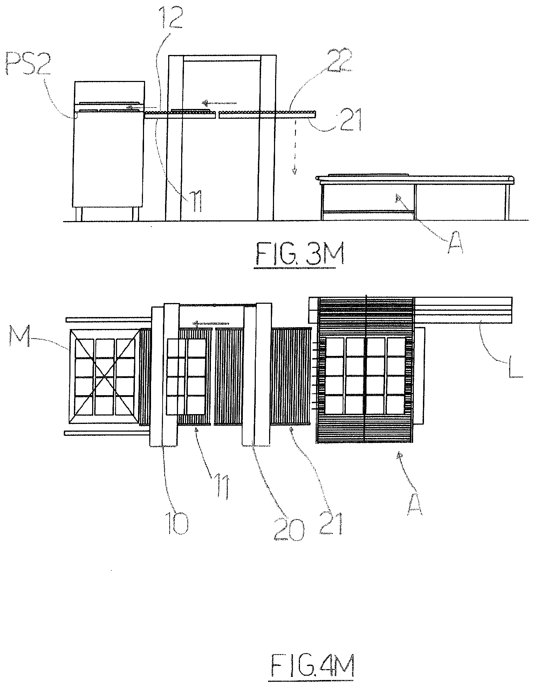

The first transfer unit (12) might be activated to transfer the 3 x 4 group of tiles above the second storage shelf (PS2) of the storehouse (M) and, once this transfer has been completed, the second transfer unit (22) will in turn be activatable to transfer the remaining 2 rows of 4 tiles onto the first transfer unit (12) (figures 3M and 4M).

In the meantime, a third group of 4 rows of 4 tiles (one group of 4 x 4 tiles) will have been formed on the infeed station (A).

The second movable frame (21) can then be immediately translated (broken line) in the lowered base position so that the second transfer unit (22) can newly receive the third group of 4 rows of 4 tiles.

In the meantime, the first movable frame (11) can be positioned in a third raised position so that the first transfer unit (12), having 2 rows of 4 tiles thereon, can be positioned at a third storage shelf of the storehouse (not illustrated in the figures).

The second movable frame (21) can then be translated in order to be positioned in a further relative raised position in order for the second transfer unit (22) to be positioned at the first transfer unit (12) in the relative third position.

The second transfer unit (22) will in turn be activatable to transfer a single row of 4 tiles onto the first transfer unit (12), newly going to form a group of 3 rows of 4 tiles, while a group of 3 rows of 4 tiles will remain on the second transfer unit (22).

Then, the first transfer unit (12) might be activated to transfer the group of 3 rows of 4 tiles onto the third storage shelf of the storehouse (M).

Following the transfer, the second transfer unit (22) will in turn be activatable to transfer the 3 rows of 4 tiles remaining thereon onto the first transfer unit (12).

Once the transfer has completed, the second movable frame (21) can be immediately translated with respect to the second bearing frame (20), so as to be newly positioned into the lowered base position so that the second transfer unit (22) can receive a new group of 4 rows of 4 tiles.

In the meantime, the first movable frame (11) can be translated with respect to the first bearing frame (10) so as to be positioned in a fourth raised position in which the first transfer unit (12), having thereon a group of 3 rows of 4 tiles, is positioned at a fourth storage shelf, and then activated to transfer the group of 3 rows of 4 tiles onto the fourth storage shelf.

The above-described cycle will be repeated up until all the storage shelves of the storehouse have been filled.

A like operativity can be followed also in a case where it is necessary to proceed with loading and unloading all of the storage shelves of the storehouse.

With the above-described characteristics, the loading/unloading system proposed by the invention is able to carry out a full loading, or a full unloading, of the storehouse in significantly shorter times than with the prior art.

## Claims

1. A tile loading/unloading system (100) for carrying out transfer of tiles from an infeed station (A) to a storehouse (M) and vice versa, wherein the storehouse (M) comprises a series of storage shelves (P) arranged one above another, the system (100) comprising:
a first bearing frame (10), arranged facing the storehouse (M);
a first movable frame (11), mounted on the first bearing frame (10) so as to be translatable vertically with respect to the first bearing frame (10) and comprising a first transfer unit (12) which is configured to receive tiles and is activatable to transfer and move the tiles, the first movable frame (11), being translatable vertically with respect to the first bearing frame (10) so as to position the first transfer unit (12) in a series of raised positions at the various storage shelves (P) of the storehouse (M),
**characterised in that** it comprises:
a second bearing frame (20), arranged between the first bearing frame (10) and the infeed station (A),
a second movable frame (21), mounted on the second bearing frame (20) so as to be translatable vertically with respect to the second bearing frame (20) and comprising a second transfer unit (22) which is configured to receive tiles and is activatable to transfer and move the tiles, wherein the second movable frame (21) is translatable vertically with respect to the second bearing frame (20) independently of the translation of the first movable frame (11) with respect to the first bearing frame (10),
wherein the second movable frame (21) is translatable vertically with respect to the second bearing frame (20) so as to position the second transfer unit (22) in a lowered base position, at the infeed station (A), as well as in a series of raised positions at the raised positions in which the first transfer unit (12) of the first movable frame (11) is positioned.

2. The system (100) of claim 1, wherein the second movable frame (20) is configured and realised so that a number of tiles can be positioned on the second transfer unit (22) that is greater than the number of tiles positionable on each shelf of the storage shelves (P) of the storehouse (M).

3. The system (100) of claim 2, wherein the first movable frame (10) is configured and realised so that a number of tiles can be positioned on the first transfer unit (12) that is greater than the number of tiles positionable on each shelf of the storage shelves (P) of the storehouse (M).

4. The system (100) of any one of the preceding claims, wherein the first bearing frame (10) comprises two uprights (13) and the first movable frame (11) is slidably mounted on the two uprights (13), wherein the second bearing frame (20) comprises two uprights (23) and the second movable frame (21) is slidably mounted on the two uprights (23).

5. The system (100) of any one of the preceding claims, wherein the first transfer unit (12) comprises a first group of motorised rollers (120), wherein the second transfer unit (22) comprises a second group of motorised rollers (220).

6. The system (100) of any one of the preceding claims, wherein the first movable frame (11) comprises a main member (15), slidably mounted on the two uprights (13) of the first bearing frame (10), and at least two secondary members (16), coupled to the main member (15), for supporting the first transfer unit (12), wherein the second movable frame (21) comprises a main member (25), slidably mounted on the two uprights (23) of the second bearing frame (20), and at least two secondary members (26), coupled to the main member (25), for supporting the second transfer unit (22).

## Patentansprüche

1. System (100) zum Laden/Entladen von Fliesen zum Überführen von Fliesen von einer Einlaufstation (A) zu einem Magazin (M) und umgekehrt, wobei das Magazin (M) eine Reihe von Lagerböden (P) umfasst, die übereinander angeordnet sind, wobei das System (100) umfasst:
einen ersten Trägerrahmen (10), der dem Magazin (M) zugewandt angeordnet ist,
einen ersten beweglichen Rahmen (11), der auf dem ersten Trägerrahmen (10) montiert ist, um vertikal relativ zu dem ersten Trägerrahmen (10) verschiebbar zu sein, und der eine erste Transfereinheit (12) umfasst, die dafür ausgelegt ist, Fliesen zu übernehmen, und die aktivierbar ist, um die Fliesen zu transferieren und zu bewegen, wobei der erste bewegliche Rahmen (11) vertikal relativ zu dem ersten Trägerrahmen (10) verschiebbar ist, um die erste Transfereinheit (12) in einer Reihe angehobener Stellungen an den verschiedenen Lagerböden (P) des Magazins (M) zu positionieren,
**dadurch gekennzeichnet, dass** es umfasst:
einen zweiten Trägerrahmen (20), der zwischen dem ersten Trägerrahmen (10) und der Einlaufstation (A) angeordnet ist,
einen zweiten beweglichen Rahmen (21), der auf dem zweiten Trägerrahmen (20) montiert ist, um vertikal relativ zu dem zweiten Trägerrahmen (20) verschiebbar zu sein, und der eine zweite Transfereinheit (22) umfasst, die dafür ausgelegt ist, Fliesen zu übernehmen, und die aktivierbar ist, um die Fliesen zu transferieren und zu bewegen, wobei der zweite bewegliche Rahmen (21) vertikal relativ zu dem zweiten Trägerrahmen (20) verschiebbar ist, unabhängig von der Translationsbewegung des ersten beweglichen Rahmens (11) relativ zu dem ersten Trägerrahmen (10),
wobei der zweite bewegliche Rahmen (21) vertikal relativ zu dem zweiten Trägerrahmen (20) verschiebbar ist, um die zweite Transfereinheit (22) in einer abgesenkten Grundstellung, an der Einlaufstation (A), zu positionieren, sowie in einer Reihe angehobener Stellungen an den angehobenen Stellungen, in denen die erste Transfereinheit (12) des ersten beweglichen Rahmens (11) positioniert ist.

2. System (100) nach Anspruch 1, wobei der zweite bewegliche Rahmen (21) derart ausgelegt und gestaltet ist, dass eine Anzahl von Fliesen auf der zweiten Transfereinheit (22) positioniert werden kann, die größer ist als die Anzahl von Fliesen, die auf jedem Ablageboden der Lagerböden (P) des Magazins (M) abgelegt werden kann.

3. System (100) nach Anspruch 2, wobei der erste bewegliche Rahmen (11) derart ausgelegt und gestaltet ist, dass eine Anzahl von Fliesen auf der ersten Transfereinheit (12) positioniert werden kann, die größer ist als die Anzahl von Fliesen, die auf jedem Ablageboden der Lagerböden (P) des Magazins (M) abgelegt werden kann.

4. System (100) nach einem der vorhergehenden Ansprüche, wobei der erste Trägerrahmen (10) zwei Ständer (13) umfasst und der erste bewegliche Rahmen (11) gleitbar auf den zwei Ständern (13) montiert ist, wobei der zweite Trägerrahmen (20) zwei Ständer (23) umfasst und der zweite bewegliche Rahmen (21) gleitbar auf den zwei Ständern (23) montiert ist.

5. System (100) nach einem der vorhergehenden Ansprüche, wobei die erste Transfereinheit (12) eine erste Gruppe motorbetriebener Rollen (120) umfasst, wobei die zweite Transfereinheit (22) eine zweite Gruppe motorbetriebener Rollen (220) umfasst.

6. System (100) nach einem der vorhergehenden Ansprüche, wobei der erste bewegliche Rahmen (11) ein Hauptelement (15) umfasst, das gleitbar auf den zwei Ständern (13) des ersten Trägerrahmens (10) montiert ist, und zumindest zwei Nebenelemente (16), die an das Hauptelement (15) gekoppelt sind, um die erste Transfereinheit (12) zu tragen, wobei der zweite bewegliche Rahmen (21) ein Hauptelement (25) umfasst, das gleitbar auf den zwei Ständern (23) des zweiten Trägerrahmens (20) montiert ist, und zumindest zwei Nebenelemente (26), die an das Hauptelement (25) gekoppelt sind, um die zweite Transfereinheit (22) zu tragen.

## Revendications

1. Un système (100) de chargement/déchargement de carreaux pour effectuer le transfert de carreaux d'une station d'alimentation (A) à un magasin (M) et inversement, dans lequel le magasin (M) comprend une série d'étagères de stockage (P) disposées les unes au-dessus des autres, le système (100) comprenant :
un premier châssis porteur (10), disposé face au magasin (M) ;
un premier châssis mobile (11), monté sur le premier châssis porteur (10) de manière à pouvoir être translaté verticalement par rapport au premier châssis porteur (10) et comprenant une première unité de transfert (12) qui est configurée pour recevoir des carreaux et peut être actionnée pour transférer et déplacer les carreaux, le premier châssis mobile (11) pouvant être translaté verticalement par rapport au premier châssis porteur (10) de manière à positionner la première unité de transfert (12) dans une série de positions soulevées au niveau des différentes étagères de stockage (P) du magasin (M),
**caractérisé en ce qu'**il comprend :
un deuxième châssis porteur (20), disposé entre le premier châssis porteur (10) et la station d'alimentation (A),
un deuxième châssis mobile (21), monté sur le deuxième châssis porteur (20) de manière à pouvoir être translaté verticalement par rapport au deuxième châssis porteur (20) et comprenant une deuxième unité de transfert (22) qui est configurée pour recevoir des carreaux et peut être actionnée pour transférer et déplacer les carreaux,
où le deuxième châssis mobile (21) peut être translaté verticalement par rapport au deuxième châssis porteur (20) indépendamment de la translation du premier châssis mobile (11) par rapport au premier châssis porteur (10), où le deuxième châssis mobile (21) peut être translaté verticalement par rapport au deuxième châssis porteur (20) de manière à positionner la deuxième unité de transfert (22) dans une position abaissée de base, au niveau de la station d'alimentation (A), ainsi que dans une série de positions soulevées au niveau des positions soulevées dans lesquelles est positionnée la première unité de transfert (12) du premier châssis mobile (11).

2. Le système (100) selon la revendication 1, dans lequel le deuxième châssis mobile (21) est configuré et réalisé de manière à pouvoir positionner sur la deuxième unité de transfert (22) un nombre de carreaux qui est supérieur au nombre de carreaux pouvant être positionné sur chaque étagère des étagères de stockage (P) du magasin (M).

3. Le système (100) selon la revendication 2, dans lequel le premier châssis mobile (11) est configuré et réalisé de manière à pouvoir positionner sur la première unité de transfert (12) un nombre de carreaux qui est supérieur au nombre de carreaux pouvant être positionné sur chaque étagère des étagères de stockage (P) du magasin (M).

4. Le système (100) selon l'une quelconque des revendications précédentes, dans lequel le premier châssis porteur (10) comprend deux montants (13) et le premier châssis mobile (11) est monté de façon coulissante sur les deux montants (13), dans lequel le deuxième châssis porteur (20) comprend deux montants (23) et le deuxième châssis mobile (21) est monté de façon coulissante sur les deux montants (23).

5. Le système (100) selon l'une quelconque des revendications précédentes, dans lequel la première unité de transfert (12) comprend un premier groupe de rouleaux motorisés (120), dans lequel la deuxième unité de transfert (22) comprend un deuxième groupe de rouleaux motorisés (220).

6. Le système (100) selon l'une quelconque des revendications précédentes, dans lequel le premier châssis mobile (11) comprend un organe principal (15), monté de façon coulissante sur les deux montants (13) du premier châssis porteur (10), et au moins deux organes secondaires (16), accouplés à l'organe principal (15), pour supporter la première unité de transfert (12), dans lequel le deuxième châssis mobile (21) comprend un organe principal (25), monté de façon coulissante sur les deux montants (23) du deuxième châssis porteur (20), et au moins deux organes secondaires (26), accouplés à l'organe principal (25), pour supporter la deuxième unité de transfert (22).
